# EUROPEAN PATENT APPLICATION

(11) **EP 1 223 495 A1**
(43) Date of publication of application: **17.07.2002**
(21) Application number: 01410003.6
(22) Date of filing: 16.01.2001
(51) Int. Cl.: G06F 1/00

(54) **A method for privately accessing data in a computer system usable by different users and related computer system**

(71) Applicant: Hewlett-Packard Company, A Delaware Corporation, Palo Alto, CA 94304 (US)
(72) Inventor: Vicard, Dominique, 38190 Bemin (FR); Brouhon, Patrick, 38410 Saint Martin d'Uriage (FR)
(74) Representative: Lloyd, Richard Graham

(57) **Abstract**

A computer system comprises a central unit operated by an operating system and capable of storing user-related data which are specific to a given user in a data storage. The system further comprises:
a transceiver unit connected to said central unit and capable of communicating with a portable object through a communication link,
means for controlling said transceiver unit so as to periodically derive from a communication with a portable object a session key associated with a user bearing or carrying said portable object and for providing said session key to the central unit,
means for storing said session key,
means for encrypting with said session key all user-related data before they are written in a computer storage, and
means for decrypting with said session key the user-related data after they are read from said computer storage.

The present invention also provides a method for private data access.

The invention guarantees privacy in the use of public PCs such as in hotels, airports, etc.

## Description

The present invention relates to a system and method for avoiding that third parties can access private data related to a given user on a computer system that can be used by several people.

### Background of the invention

In many places, such as hotel business centers, airport lounges or other public or private premises, it is frequent that a given computer system such as an ordinary personal computer may be used on demand by different guests or other people for many activities such as running internal software of the PC, browsing on the Internet, etc.

In such environments, when a first user stops using the PC, it is quite possible that a subsequent user will be able to access data which are stored in the PC (typically in mass storage such as a hard disk drive an/or in a working memory such as a random access memory (RAM)) and which were private to the previous user.

One known way of avoiding this risk of privacy violation is to ask each user, before he or she stops his or her work on the equipment, to delete all information containing private data from the computer hard disk and from the RAM. Such information might include data files created by the user (text files, etc.), related cache files, operating system swap files, internet cookies, internet cache files, internet browser history files, etc.

Such approach has three main drawbacks. First of all, it is quite a lengthy and tedious operation as there may be a great number of such files, cookies or other information, and that each has to be individually located and properly deleted. Secondly, in the very complex directory structure of modern operating systems, some of these files, cookies or other information might be quite difficult to locate, and there is a significant risk that the user will inadvertently leave some of these on the hard disk or in RAM. Thirdly, even if files have been properly deleted, software tools are known which are capable of "undeleting" previously deleted files, so that in any case privacy cannot be fully guaranteed.

### Summary of the invention

An objective of the present invention is to ensure that, when several people become successive users of a single piece of computer equipment such as a public personal computer, no data concerning a given user, whether these data are personal or corporate, will be accessible to subsequent users after said given user has ceased to use the computer or physically gone away from the computer for whatever reason.

Another objective of the present invention is to provide a computer equipment wherein any type of storage which might contain data which are private to a user are accessible only as far as said user is located in adequate vicinity of said equipment.

Still another objective of the present invention is to preserve such privacy without requiring from the user any specific manipulation on the computer equipment.

Accordingly, the present invention provides in a first aspect a method for privately accessing data in a computer system which may be used by different users and which is capable of writing and reading in a computer storage user-related data during use of the computer by a given user, comprising the following steps:
providing a user with a portable object having stored therein a unique data, said object and said computer system being capable of communicating with each other via a communication link,
at the computer system, periodically polling for a portable object through said communication link to check whether a portable object is present,
in the affirmative, deriving from the communication between said computer system and said portable object a session key,
storing said session key in the computer system,
before the computer writes user-related data in the computer storage, encrypting said user-related data with said session key, and
after the computer has read user-related data in said computer storage, decrypting said user-related data.

Preferably, the method further comprises the step of deleting at least one of said stored session key and said stored encrypted user-related data when the polling and deriving steps provide a session key which is different from the currently stored session key.

Preferably also, the method further comprises the step of deleting at least one of said stored session key and said stored encrypted user-related data when the polling and deriving steps provide no session key.

It is further advantageous that said deletion step deletes both said stored session key and said stored encrypted user-related data.

Preferably, said step of deriving a session key comprises running a challenge-response protocol between said computer system and said portable object so as to generate in the computer system a session key which uniquely corresponds to the unique data stored in the portable object.

Said computer storage preferably comprises a mass memory unit and also possibly a working memory of the computer.

Said portable object may be comprised of a dedicated token or badge having a storage circuit for said unique data and a transceiver circuit, or a user-owned electronic equipment having a storage circuit for said unique data and a transceiver circuit.

Such user-owned equipment is for instance selected from the group comprising mobile phones and palmtop computer equipment.

In such case, said providing step preferably comprises loading into the storage circuit of said user-owned electronic equipment said unique data.

In a second aspect, the present invention provides a computer system, comprising a central unit operated by an operating system and capable of storing user-related data which are specific to a given user in a data storage, further comprising:
a transceiver unit connected to said central unit and capable of communicating with a portable object through a communication link,
means for controlling said transceiver unit so as to periodically derive from a communication with a portable object a session key associated with a user bearing or carrying said portable object and for providing said session key to the central unit,
means for storing said session key,
means for encrypting with said session key all user-related data before they are written in a computer storage, and
means for decrypting with said session key the user-related data after they are read from said computer storage.

Said computer storage advantageously comprises a mass memory unit and also possibly a working memory.

In a convenient embodiment, the communication link between the portable object and the computer is wireless.

### Brief description of the drawings

The present invention will now be described in greater detail with reference to the appended drawings, in which:
Fig. 1 is a block-diagram of a computer system with a privacy scheme according to a preferred embodiment of the present invention, and
Fig. 2 is a flow chart on the basic operative steps performed by this computer system.

### Detailed description of the preferred embodiment

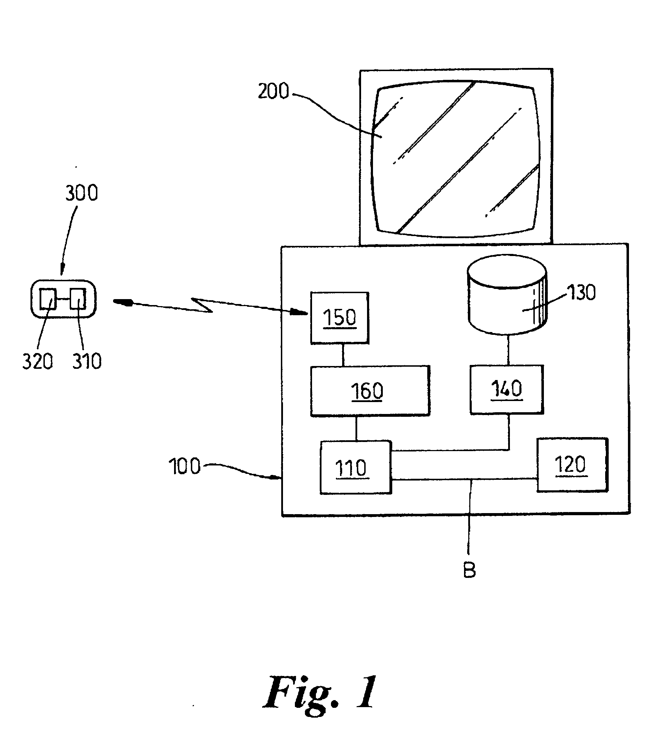

With reference to Fig. 1, there is shown a computer equipment, in the present species a personal computer, having a central unit 100 and a display screen 200.

The central unit 100 houses a microprocessor 110 which can access a random access memory RAM 120 via appropriate buses B and a mass storage unit such as a hard disk 130 through an appropriate driver 140.

Other components of the equipment have not been shown but are well known to the one skilled in the art.

The computer equipment also includes a wireless transceiver unit 150 connected to the microprocessor 110 through a suitable I/O circuit 160.

The transceiver unit is capable of wireless communication with a portable object 300 having a suitable wireless communication circuit 310. In a preferred embodiment, unit 150 and circuit 310 of the portable object 300 communicate with each other according to the known "Bluetooth" standard, although other types of wireless communications may be used.

It should be noted here that, although the present embodiment provides a wireless communication link between unit 150 and portable object 300, which is particularly convenient for the user because no specific manipulation of said portable object is required, other types of communications may be used. For instance, the technologies of magnetic cards or chip cards together with appropriate card readers, or else the technology of transponders (closed magnetic coupling) may be used.

The portable object 300 also includes a memory 320 in which is stored a unique data from which a so-called "session key" will be provided to the computer as described later.

Unit 150 and portable object 300 are capable of communicating on the wireless link so that the session key may be safely determined from the contents of the portable object memory 320 and provided to the microprocessor 110 through circuits 310 and 150 according to a specified key transmission protocol.

In a preferred embodiment, the unique data contained in the portable object is the session key itself, and such protocol can be a challenge/response protocol, such as the known Diffie-Hellman exchange key protocol, by which the session key is transmitted to the microprocessor 110 with a high degree of security (using an adequate communication key also kept by the portable object and the microprocessor), and stored in an appropriate location ("session key store") in the RAM of the computer equipment.

The operating system of the computer equipment may be a standard one such as "Windows" (trademark). However, such operating system has embedded therein a software unit in the form of a key polling routine that causes the transceiver unit 150 to poll for a session key present in a portable object within the reach of said unit 150 at given time intervals. The operating system also encloses an encryption/decryption tool capable of using the session key received from a portable object for selectively encrypting with said session key all data or selected data which are to be written in the hard disk storage 130, before data writing effectively occurs, and for decrypting with said key all data stored on disk 130 which had been previously encrypted with the same session key.

Any suitable known key-based encryption/decryption scheme may be used.

Preferably, all data which are encrypted before being written on the disk are stored in a specific disk area reserved for that purpose, while the remainder of the disk is read from and written into in the normal way.

Preferentially, such encryption/decryption scheme is also used when writing data (selected parts or all) into RAM and when reading from RAM said encrypted data.

Additionally, the disk storage has a special volatile area (e.g. a partition or other disk space subdivision) in which all encrypted data are written, while the remaining areas of the disk are used in the normal way. Such special volatile area of the disk can be erased upon specific instructions from the microprocessor 110 in particular circumstances as will be described in the following.

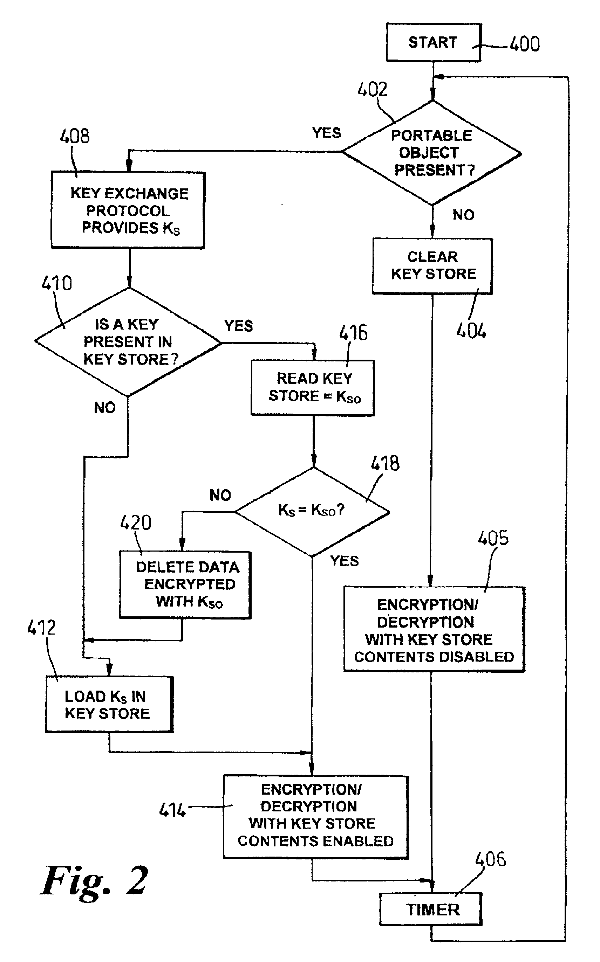

The basic operation of the above-described computer equipment will now be described with specific reference to Fig. 2.

Preliminarily, it should be noted that any person who wants to use the computer equipment is first given by an authorizing personnel a portable object 300 including a specific session key or unique data from which the computer will be capable of deriving a session key. Such portable object can be a token, badge or card incorporating circuits 310 and 320. The object may be a battery-powered unit received or embedded in a suitable small housing such as a card-shaped housing, or it may be a so-called transponder unit powered at least partially with the electromagnetic energy received from transceiver unit 150.

Alternatively, the portable object may be an equipment owned by that person, such as a mobile phone, a palmtop computer, etc., capable of communicating with the transceiver unit 150 and in a memory of which a session key has been stored by the authorizing personnel though the same communication link or a different one (e.g. infrared port).

First of all, when the computer equipment is turned on, booting occurs so that all programs and data necessary for the operating system to run are loaded into RAM in the conventional way (block 400 in Fig. 2). After this basic booting, a session key polling routine 402 is executed so that the microprocessor can check, through transceiver unit 150, whether a portable object storing a session key is within the range of said unit 150. This in turn reveals whether a user bearing a portable object 300 is or not in the vicinity of the computer equipment.

If such polling reveals that no portable object is within range, then the computer equipment clears the session key store in step 404 (or keeps is cleared), disables the encryption/decryption mechanism at step 405 (or keeps it disabled), and then executes again at specific intervals (e.g. around every minute) as determined by a waiting step 406 the session key polling routine 402.

Alternatively or in addition, the session key polling routine can be caused to be immediately executed after an extended rest period as soon as a candidate user causes an action on an input device (such as a keyboard, a mouse or the like) of the computer equipment.

When the session key polling routine detects the presence of a portable object storing a session key, the key exchange protocol is conducted in step 408 so that a session key Ks is provided to the computer equipment after being derived from the unique data contained in object 300 (which can be the session key itself or different data).

After session key Ks has been provided, the computer determines in step 410 whether a session key was already present in the computer session key store. If yes, the computer then reads the session key, denoted Kso, from the store in step 416.

Then the computer executes the step of comparing Ks and Kso, in order to determine whether the same user as in the previous polling, or a different user, is in front of the computer.

The first situation is determined by the fact that the session key has not changed, i.e. Ks = Kso. in such case, the user may use the computer with the encryption/decryption mechanism kept enabled in step 414.

The second situation is determined by the fact that the session key has changed, i.e. Ks ≠ Kso. In that case, the previous session key Kso is deleted from the session key store (step 420) and the new session key Ks is loaded into session key store (step 412), after which the encryption/decryption mechanism using session key store contents is enabled (step 414).

Therefore, whether a session key was present or not in the session key store when a new user arrives in the vicinity of the computer equipment, such new user may use the equipment in a way which he will perceive as the normal way, except that all user-created, user-modified or user-related data in the computer equipment will be written onto the hard disk or into RAM after having been encrypted with the session key stored in session key store, and that, in order to allow the same user to read such data from the hard disk or the RAM, all such read data are decrypted using the same session key.

During this stage of computer use by the user, the session key polling routine keeps being executed at specific time intervals.

As long as the same user is in the vicinity of the equipment, the same session key is provided again in step 408, so that data keep being encrypted and decrypted with the same session key.

Now when the session key polling routine 402, 404 results in providing a session key Ks which is different from the previous one Kso, then the process goes from step 418 to step 420, in which:
- the specific storage area of the hard disk, containing data encrypted with Kso, is deleted (or blanked or emptied);
- the data which had been stored in RAM after having also been encrypted with Kso are deleted (or blanked or emptied)

After step 420, step 412 is executed whereby the new session key Ks is stored in session key store (so that, in this case, the previous session key Kso is crashed).

It should be noted here that, when a user who was using the computer equipment leaves the equipment for a moment, then the next polling step will merely lead to clearing the session key store in step 404, without deleting the user data. This means that, when the same user comes back again, the associated session key is loaded again in session key store through steps 402, 408, 410, 412, so that the user may resume work without having lost any data.

In a preferred embodiment, data which are encrypted before being written in the RAM are all stored in a given section of the computer dynamic RAM which has a special refresh scheme. More particularly, the refresh cycles of this given section of the RAM are enabled only as long as a valid session key resides in the computer. As soon as a session key change is detected in step 418, the clearing step 420 at the RAM level is performed by the refresh cycles of said given RAM section being disabled, so that all data previously contained therein are cleared.

In this manner, the data which are private to the user who has just been replaced by a subsequent user are totally unavailable to said subsequent user.

It should be emphasized here that, by deleting both the data encrypted with a session key (in step 420) and the session key itself (in step 412) when a user is replaced by a different user, the privacy scheme according to the present invention offers a double security level.

It should also be noted that providing a session key to the computer through a challenge/response scheme performed with the portable object has the advantage that replay-based fraudulent attack of the privacy scheme is strictly avoided.

According to another feature of the present invention, the portable object and/or the computer equipment is advantageously provided with some display means (e.g. a light or the like on the portable object and/or a security message in a specific display area on the computer display screen) to indicate to the user the status of the privacy scheme. Such display is advantageously controlled at steps 414 and 405.

There has been described a method for ensuring the privacy of user data stored in a computer system during a user session, comprising: using unique data stored in a portable object with which users of the system are provided to derive a session key from a communication between said computer system and said object; encrypting user data with said session key prior to storage in the system and decrypting said user data when it is retrieved from storage during a user session; deleting said session key when the user session is over, so that the stored user data is no longer accessible.

The present invention can be applied to any computer equipment intended to be used by different users wherein privacy should be ensured for each individual user.

## Claims

1. A method for privately accessing data in a computer system which may be used by different users and which is capable of writing and reading in a computer storage user-related data during use of the computer by a given user, comprising the following steps:
providing a user with a portable object having stored therein a unique data, said object and said computer system being capable of communicating with each other via a communication link,
at the computer system, periodically polling for a portable object through said communication link to check whether a portable object is present,
in the affirmative, deriving from the communication between said computer system and said portable object a session key,
storing said session key in the computer system,
before the computer writes user-related data in the computer storage, encrypting said user-related data with said session key, and
after the computer has read user-related data in said computer storage, decrypting said user-related data.

2. A method according to claim 1, further comprising the step of deleting at least one of said stored session key and said stored encrypted user-related data when the polling and deriving steps provide a session key which is different from the currently stored session key.

3. A method according to claim 2, wherein said deletion step deletes both said stored session key and said stored encrypted user-related data.

4. A method according to any one of claims 1 to 3, further comprising the step of deleting at least one of said stored session key and said stored encrypted user-related data when the polling and deriving steps provide no session key.

5. A method according to claim 4, wherein said deletion step deletes only said stored session key.

6. A method according to any one of claims 1 to 5, wherein said step of deriving a session key comprises running a challenge-response protocol between said computer system and said portable object so as to generate in the computer system a session key which uniquely corresponds to the unique data stored in the portable object.

7. A method according to any one of claims 1 to 6, wherein said computer storage comprises a mass memory unit.

8. A method according to claim 7, wherein said computer storage also comprises a working memory of the computer.

9. A method according to any one of claims 1 to 8, wherein said portable object is comprised of a dedicated token or badge having a storage circuit for said unique data and a transceiver circuit.

10. A method according to any one of claims 1 to 8, wherein said portable object is comprised of a user-owned electronic equipment having a storage circuit for said unique data and a transceiver circuit.

11. A method according to claim 10, wherein said user-owned equipment is selected from the group comprising mobile phones and palmtop computer equipment.

12. A method according to claim 10 or 11, wherein said providing step comprises loading into the storage circuit of said user-owned electronic equipment said unique data.

13. A method according to any one of claims 1 to 12, wherein said communication link is a wireless communication link.

14. A computer system, comprising a central unit operated by an operating system and capable of storing user-related data which are specific to a given user in a data storage, further comprising:
a transceiver unit connected to said central unit and capable of communicating with a portable object through a communication link,
means for controlling said transceiver unit so as to periodically derive from a communication with a portable object a session key associated with a user bearing or carrying said portable object and for providing said session key to the central unit,
means for storing said session key,
means for encrypting with said session key all user-related data before they are written in a computer storage, and
means for decrypting with said session key the user-related data after they are read from said computer storage.

15. A computer system according to claim 14, further comprising:
means for deleting at least one of said stored session key and said stored encrypted data when the transceiver unit provides to the central unit a session key which is different from a previous one.

16. A computer system according to claim 15, wherein said deletion means are capable of deleting both said stored session key and said stored encrypted data.

17. A computer system according to any one of claims 14 to 16, further comprising:
means for deleting at least one of said stored session key and said stored encrypted data as soon as the transceiver unit does not provide to the central unit the same session key within a given timeframe.

18. A computer system according to claim 17, wherein said deletion means are capable of deleting only said session key.

19. A computer system according to any one of claims 14 to 18, wherein said computer storage comprises a mass memory unit.

20. A computer system according to claim 19, wherein said computer storage also comprises a working memory.

21. A computer system according to any one of claims 14 to 20, wherein said session key is obtained through a challenge-response protocol between said transceiver unit and said portable object.

22. A computer system according to any one of claims 14 to 21, wherein said communication link is a wireless communication link.

23. A method for ensuring the privacy of user data stored in a computer system during a user session, comprising:
using unique data stored in a portable object with which users of the system are provided to derive a session key from a communication between said computer system and said object;
encrypting user data with said session key prior to storage in the system and decrypting said user data when it is retrieved from storage during a user session;
deleting said session key when the user session is over, so that the stored user data is no longer accessible.
